# EUROPEAN PATENT APPLICATION

(11) **EP 1 287 774 A1**
(43) Date of publication of application: **05.03.2003**
(21) Application number: 02017871.1
(22) Date of filing: 08.08.2002
(51) Int. Cl.: A47J 37/07

(54) **Gas burner and cover system for grills**

(30) Priority: 10.08.2001 US 927993
(71) Applicant: W.C. Bradley Company, Columbus, Georgia 31904 (US)
(72) Inventor: Johnston, Robert, Colombus, GA 31904 (US); Williams, Ben, Midland, GA 31820 (US)
(74) Representative: Martin, Didier

(57) **Abstract**

An apparatus and mechanism providing a plurality of individual gas burners (10) for use in a grill (18), each individual gas burner (10) with its own gas supply line (12), and the individual gas burners (10) connected such that by igniting one individual gas burner, the remaining individual gas burners may be ignited if desired. In the preferred embodiment, the individual gas burners (10) may also include removable covers (40), wherein the covers may serve to protect the individual gas burners (10). In the preferred embodiment, the removable covers (40) may be used to hold wood chips (70) or other material that may be used to smoke or add flavor to items cooking in the grill (18), or may be removed and not used with the individual gas burner (10) if desired.

## Description

### TECHNICAL FIELD

The present invention is generally related to barbecue grills, and, more particularly, is related to gas burners which are adapted for use in barbecue grills.

### BACKGROUND OF THE INVENTION

Gas-fired barbecue grills typically incorporate either a single gas burner, or gas burner tubes arranged in various configurations, which are usually mounted within the interior of a cooking chamber. The gas burner or gas burner tubes are typically mounted in the lower portion of the cooking chamber below a cooking surface, such as a grill or grate, such that when gas is supplied to the gas burner or gas burner tubes, such as from an LP gas tank, and lit, heat is provided for cooking food items placed upon the cooking surface.

A typical gas burner is formed of metal and configured with an interior chamber adapted to receive a flow of gas from one or more gas feed lines. The interior chamber of a gas burner is usually adapted to distribute the flow of gas from the gas feed lines about the gas burner so that the gas may be distributed through a series of gas orifices. Typically, the gas orifices are formed about a periphery of the gas burner so as to provide a relatively large flame pattern, and typically one gas burner is used to provide heat for the entire cooking chamber.

Alternatively, barbecue grills may employ gas burner tubes in the cooking chamber, where the gas burner tubes are configured in a grid or pattern of lines to maximize the flame pattern. The gas burner tubes are typically configured with a number of orifices to distribute gas, and arranged to provide a relatively large flame pattern.

Typical barbecue grills may have burners with separate chambers which can be unused, i.e. unlit, and which forms separate cooking areas. There are also grills with separate burner tubes that can be lit or unlit to try and achieve separate cooking areas. However, in general these grills are not able to regulate successfully the temperatures within the grill. Further, these grills do not have the ability to be used as, for example, a smoker if desired without time-consuming modifications.

Therefore, there is a need for improved devices and systems which address these and other shortcomings of the prior art, and more particularly, a grill system adaptable for more than one use.

### SUMMARY OF THE INVENTION

The present invention comprises an apparatus and mechanism providing a plurality of individual gas burners for use in a grill, each individual gas burner having its own gas supply line, and the individual gas burners connected such that by igniting one individual gas burner, the remaining individual gas burners may be ignited if desired. In the preferred embodiment, the individual gas burners also include removable covers, wherein the covers serve to protect the individual gas burners while defining a heat distribution pattern. In the preferred embodiment, the removable covers are reversible so that they are usable to hold wood chips or other material that may be used to smoke or add flavor to items cooking in the grill, or covers may be removed and not used with the individual gas burner if desired.

Other features and advantages of the present invention will be readily apparent to one with skill in the art upon examination of the following drawings and detailed description. It is intended that all such additional systems, methods, features, and advantages be included within this description as being within the scope of the present invention, as shown and claimed herein.

### BRIEF DESCRIPTION OF THE DRAWINGS

The invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is an exploded, perspective view of a preferred embodiment of the present invention within the cooking chamber of a barbecue grill, in a first cooking configuration;
FIG. 2 is an exploded, perspective view of another configuration of the embodiment depicted in FIG. 1;
FIG. 3 is a partial, cut-away, side elevational view of the embodiment depicted in FIG. 1;
FIG. 4 is a perspective view of one implementation of the cover system of the embodiment depicted in FIG. 1 with the removable cover in a first cooking configuration; and
FIG. 5 is a perspective view of another implementation of the cover system of the embodiment depicted in FIG. 1 with its removable cover in a second cooking configuration.

### DETAILED DESCRIPTION OF THE PREFERRED EMBODIMENT

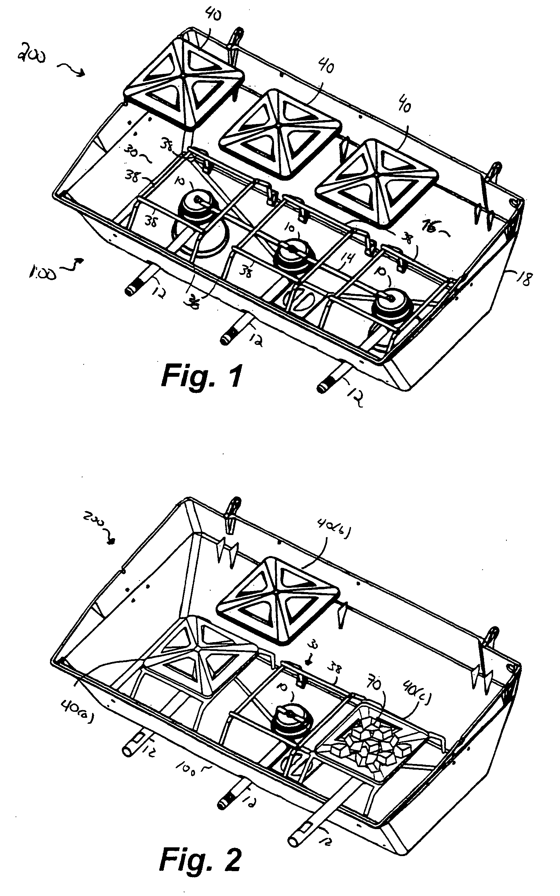

Reference will now be made in detail to the drawings wherein like reference numerals indicate like parts throughout the several views. Shown in FIG. 1 is a preferred embodiment of the gas burner system 100 which is constructed of metal, such as stainless steel or cast iron, or other suitable materials. A preferred embodiment of the present invention includes more than one individual gas burner element 10 configured within a cooking chamber 16 of a grill 18. The term "cooking" is used generically to include heating, smoking or other possible grill functions.

In this preferred embodiment, the individual gas burner elements 10 are each separate round gas burner arranged inside the cooking chamber 16 of the grill 18. The gas burner elements 10 are independently operable to produce heat within the cooking chamber 16. FIG. 1 depicts three individual gas burner elements 10, however, more or fewer individual gas burner elements 10 are possible in different embodiments. Additionally, FIG. 1 depicts the individual gas burner elements 10 in a row, however, other patterns for the individual gas burner elements 10 are possible, such as, without limitation, circular, angular, square, etc.

In the preferred embodiment, the individual gas burner elements 10 are used individually, or in combination, to produce heat in distinct parts of the cooking chamber 16. Heat in distinct parts of the cooking chamber 16 is useful, among other things, to allow localized heat to cook certain food items in one part of the cooking chamber 16, or to allow the use of a pot in the cooking chamber 16 if desired. In this preferred embodiment, the individual gas burner elements 10 can also all be used at the same time to provide a substantially uniform heat throughout the entire cooking chamber 16 as in a typical grill 18.

In the preferred embodiment, each individual gas burner element 10 has its own supply line 12 defining a plurality of individual gas supply lines supplying gas to the individual gas burner element 10. Each supply line 12 is preferably connected at one end to an individual circular gas burner element 10, and at the other end to a source of gas (not shown). The source of gas can include, without limitation, an individual tank of gas for each gas supply line 12, a common tank of gas for use by all gas supply lines 12, a residential gas line, or other gas sources that would be known to one of ordinary skill in the art.

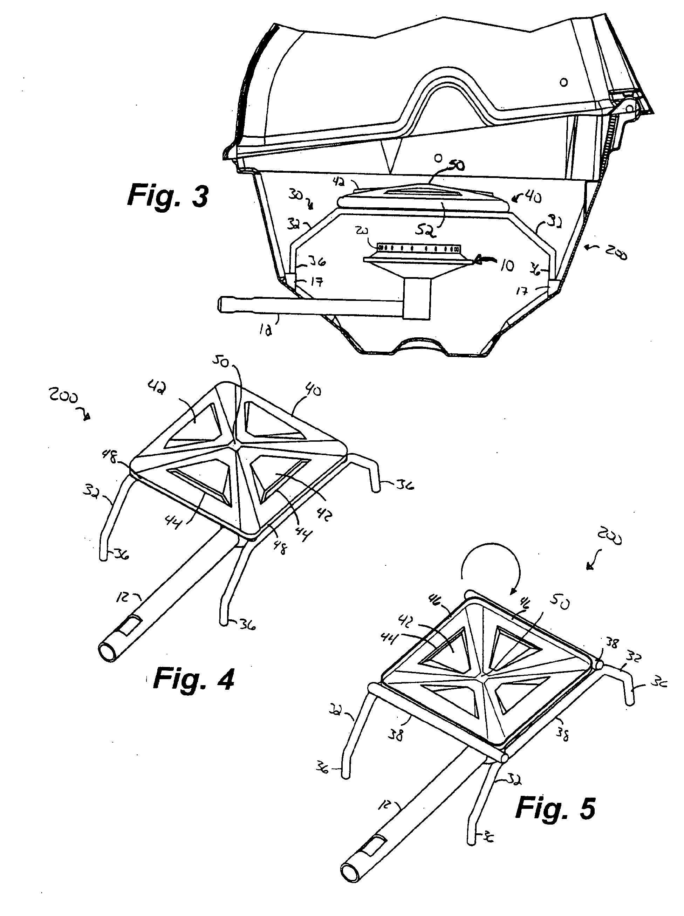

In one embodiment, the supply line 12 comprises a venturi tube delivering gas to the individual gas burner element 10. In this embodiment, gas is delivered through a venturi tube to the gas burner element 10 and is then distributed through the interior of the gas burner element. Preferably, the gas is dispersed through a plurality of gas orifices 20 (see FIG. 3) formed about the upper surface of the individual gas burner element 10. Once ignited by a typical ignition source, the gas is delivered through the gas orifices 20, providing a relatively even flame distribution for heating food items placed upon the cooking surface of the grill 18, or heating items placed over the individual gas burner element 10.

Additionally, as depicted in FIG. 1, the individual gas burner elements 10 are connected by means, such as by hollow tubes 14. The hollow tubes 14 may be substantially round, c-shaped, oval, square, or any like shape. Additionally, in one embodiment the hollow tubes are venturi tubes. In the preferred embodiment, each hollow tube 14 connects two individual gas burner elements 10 such that a first individual gas burner element 10 that is already ignited may be used to ignite a second individual gas burner element 10 when gas is supplied to the second individual gas burner element 10 by the gas supply line 12. In this embodiment, the operator is able to select which individual gas burner elements 10 to ignite and operate, or to turn off, without the need to use an ignition source for each individual gas burner element 10.

As also shown in FIG. 1, a preferred embodiment of the present invention includes a cover system 200 (FIG. 4 and FIG. 5) with a removable burner cover 40 for covering at least one gas, preferably round, burner element 10, preferably for each individual gas burner element 10 and means to support the reversible burner cover 40 within the cooking chamber 16. In a preferred embodiment, the removable burner cover 40 is reversible onto the support means. In this preferred embodiment, the cover system 200 comprises support means forming a frame 30 and removable burner cover forming a tent cover 40 which is reversible. The frame 30 may be preferably attached to, or removed from, the cooking chamber 16 or the grill 18, and the tent cover 40 may be placed onto or removed from the frame 30 as desired. In the preferred embodiment, the tent cover 40 is placed onto and engaged with the frame 30 to secure in a removable and/or reversible manner the tent cover 40 during operation of the grill 18 above the gas burners 10.

As depicted in FIG. 3, individual covers 40 are used to cover each individual gas burner element 10. Other implementations are possible, including for instance, one single tent cover 40 configured to cover all of the individual gas burner elements 10. Additionally, in the preferred embodiment, a frame 30 is attached to the cooking chamber 16 such that the frame 30 and tent cover 40 will not move from over the individual gas burner element 10 during operation of the grill 18. In such embodiment, the frame 30 includes a plurality of legs 32. Four legs 32 are shown in FIG. 1, however, more or fewer legs 32 may be used in various implementations. Additionally, the legs 32 of the frame 30 will preferably end in feet 36. In such an embodiment, the cooking chamber 16 is configured with locators 17 such as apertures, such that the feet 36 can be inserted into the locators 17, and when the feet 36 are engaged in the locators 17, the frame 30 is held in place over the individual burner element 10. In other embodiments, the frame 30 can be attached and/or secured to the grill 18 or cooking chamber 16 in other ways, including by use of fasteners, or by permanently affixing the frame 30 to the grill 18 or cooking chamber 16.

In the preferred embodiment, the frame 30 is comprised of cross pieces 38 and is used to support the tent shaped cover 40 as described below. In this embodiment the cross pieces 38 are configured to form an aperture substantially rectilinear in shape as depicted in FIG. 1. The cross pieces 38 are preferably long, thin, solid round rods, however various diameters, shapes and/or 10 thickness may be used for the cross pieces 38. The cross pieces 38 may be permanently affixed to each other, and to the legs 36, or may be configured such that the cross pieces 38 and legs 36 are individual parts that may be assembled to form the frame 30 when the use of the frame 30 and tent cover 40 is desired. While the cross pieces 38 are shown configured in the preferred embodiment in a substantially rectilinear shape, other configurations corresponding to the shape 15 of the base portion 52 of the tent cover 40, such as round, oval, triangular, etc., are possible in different implementations.

As depicted in FIG 3, in the preferred embodiment, the tent cover 40 is substantially rectilinear and is substantially shaped like a hollow pyramid shaped cover, with a top portion 50 and a base portion 52. In the preferred embodiment, the base portion 52 is substantially rectilinear. In other implementations, the base portion 52 may be substantially triangular, circular, oval, etc. The cover 40 preferably serves among other purposes, to protect the individual gas burner element 10 from items falling onto or into the individual gas burner element 10 to obtain a gas burner shield. The tent cover 40 may also serve to dissipate heat, and when placed in the frame 30 in an inverted position (see FIG. 5) and filled with wood chips 70 (see FIG. 2), enables the grill 18 to be used as a smoker. Other applications for the tent covers 40 would be known to one of ordinary skill in the art.

As depicted in FIG. 3 and FIG. 4, the tent cover 40 is configured with a plurality of apertures 44 or vents configured such that heat will pass through the apertures when the tent cover 40 is placed over an individual gas burner 10. In the preferred embodiment, the top portion or part 50 of the tent cover 40 is configured with a plurality of raised parts 42. Each raised part 42 includes at least one vent 44 for allowing heat to pass through the tent cover 40 from the interior to the exterior thereof when the tent cover 40 is engaged with the frame 30 over an ignited individual gas burner element 10. FIG. 4 shows a tent cover 40 engaged with a frame 30, with the tent cover 40 in an upwards position that is to say extending generally upwards such that the top portion 50 of the tent cover 40 is oriented away from the individual gas burner element 10. In this configuration, the tent cover 40 engages the frame 30 such that the cross pieces 38 of the frame 30 fit snugly inside the base portion 52 of the tent cover 40, holding the tent cover 40 in place. As can be seen, the inverted cover 40 can form in its reverse or inverted position shown in FIG. 5 a basket or container for wood chips, for example.

In the preferred embodiment, the base portion 52 of the tent cover contains a lip 46 (see FIG. 5) extending around the base portion 52 in the opposite direction from the top portion 50. In this embodiment, when the tent cover 40 is placed on the base 30 in an upwards position as shown in FIG. 4, the lip 46 engages the cross pieces 38 such that the tent cover 40 is secured to the frame 35. In other embodiments, other methods may be used to secure the tent cover 40 to the frame 30, such as for instance, by use of fasteners, fitting the tent cover 40 into the aperture formed by the cross pieces 38, etc.

FIG. 5 shows a preferred embodiment of the tent cover 40 engaged with a frame 30 when the tent cover 40 is in an inverted position such that the top portion 50 of the tent cover 40 is oriented towards the individual gas burner element 10. In this configuration, the tent cover 40 can be filled with wood chips 70 (see FIG. 2), or like material, and the grill 18 can be used as a smoker. In the preferred embodiment, when the tent cover 40 is placed on the frame 30 in the inverted position as depicted in FIG. 5, the base portion 52 of the tent cover 40 fits snugly inside the aperture created by the cross pieces 38 of the frame 30.

The gas burner of the invention is preferably configured with an indented edge configured to engage the frame 30 when the burner cover 40 is placed in an inverted position onto the frame 30. According to this, the tent cover 40 is preferably configured with an indented edge which contains indentions 48 (see FIG. 4) along the sides of the base portion 52 at the point where the base portion 52 joins with the top portion 50, with the indentions 48 running, for instance, the entire length of the sides of the base portion 52. In this embodiment, when the tent cover 40 is placed on the frame in a downward or inverted position as depicted in FIG. 5, the indentions 48 engage the cross pieces 38 such that the tent cover 40 is secured to the frame 30.In other embodiments, other methods may be used to secure the tent cover 40 to the frame 30, such as for instance, by use of fasteners.

FIG. 2 demonstrates how in the preferred embodiment, the cover system 200 may be used in different configurations with the gas burner system 100. As shown in FIG. 2, and as would be appreciated by one of ordinary skill in the art, the individual gas burner elements 10 can be ignited and used individually, or more than one individual gas burner element 10 can be ignited and used as the same time. In the preferred embodiment, the cover system 200 is used in combination with the individual gas burner elements 10 in a variety of configurations. For instance, some of the tent covers 40(a) are attached to their corresponding frames 30 in an upwards position. Other tent covers 40(c) may be attached to their corresponding frames 30 in an inverted position and may be filled with wood chips 70, or like material, if desired. Additionally, one or more individual gas burner elements 10 could be used without the tent cover 40(b) to provide, for instance, focused heat upon a cooking surface or pot (not shown) placed over the individual gas burner element 10.

The foregoing description has been presented for purposes of illustration and description. It is not intended to be exhaustive or to limit the invention to the precise forms disclosed. Obvious modifications or variations are possible in light of the above teachings. The embodiment or embodiments discussed, however, were chosen and described to provide the best illustration of the principles of the invention and its practical application to thereby enable one of ordinary skill in the art to utilize the invention in various embodiments and with various modifications as are suited to the particular use contemplated. All such modifications and variations are intended to be included herein within the scope of this disclosure and the present invention and protected by the following claims.

## Claims

1. A gas burner system for a grill (18), said grill (18) being configured with a cooking chamber (16), the cooking chamber (16) including a cooking surface, the gas burner system comprising:
- at least one gas burner element (10), located inside the cooking chamber (16) and beneath the cooking surface;
- at least one gas supply line (12) having a first end and a second end, the first end of each individual gas supply line (12) being connected to a gas burner element (10), and the second end of each gas supply line being connected to a gas supply;
- a removable burner cover (40), for covering at least one gas burner element (10); and
- means (30, 32, 36, 17) to support the reversible burner cover (40) within the cooking chamber (16).

2. The gas burner system of claim 1 wherein the removable burner cover (40) is reversible.

3. The gas burner system of claim 1 or 2, and further including means to connect one or more of a plurality of individual round gas burner elements (10) to another round gas burner elements (10), which comprises a hollow tube (14) having a first end and a second end, wherein the first end of the hollow tube (14) is connected with a first round gas burner element (10), and the second end of the hollow tube is connected to a second round gas burner element (10).

4. The gas burner system of any of claims 1 to 3, wherein the hollow tube (14) is configured to conduct gas from said one burner element (10) to the gas burner element (10) to which it is connected.

5. The gas burner system of any of claims 1 to 4, wherein the removable burner cover (40) comprises a plurality of individual burner covers (40(a), 40(b), 40(c)), each of the plurality of individual burner covers configured to cover one of a plurality of individual gas burner elements (10).

6. The gas burner system of any of claims 1 to 5, wherein the reversible burner cover (40) further comprises a substantially hollow pyramidal shaped cover.

7. The gas burner system of any of claims 1 to 6, wherein the means (30, 32, 36, 17) to support the reversible burner cover (40) comprises a frame (30).

8. The gas burner system of claim 7, wherein the burner cover (40) is further configured with an indented edge, the indented edge configured to engage the frame (30) when the burner cover (40) is placed in an inverted position onto the frame (30).

9. The gas burner system of claim 8, wherein the burner cover (40) contains a plurality of vents (44) configured such that heat will pass through the vents (44) when the tent cover (40) is placed over one of the plurality of gas burner elements (10).

10. A gas burner shield for use with individual gas burner, the gas burner shield comprising:
- a tent shaped cover (40); and
- a support frame (30), the frame being configured to secure the tent shaped (40) cover above the individual gas burners (10).

11. The gas burner shield of claim 10, wherein the frame (30) is configured to attach to a grill, the grill having a cooking chamber (16) with a gas burner (10) disposed therein.

12. The gas burner shield of claim 11, wherein the frame (30) is further configured with a plurality of legs (32), each of the plurality of legs (32) ending in a foot (36), the foot (36) configured to engage locators (17) located within the cooking chamber (16) of the grill.

13. The gas burner shield of claim 12, wherein the tent cover (40) comprises a plurality of individual tent covers (40(a), 40(b), 40(c)), each of the plurality of individual tent covers configured to cover one of the individual gas burners (10).

14. The gas burner shield of claim 13, wherein the tent cover (40, 40(a), 40(b), 40(c)), comprises a top part (50) and a base portion (52).

15. The gas burner shield of claim 14, wherein the base portion (52) is rectilinear and the tent cover (40) is substantially pyramidal in shape.

16. The gas burner system of claim 15, wherein the base portion (52) of the tent cover (40) is further configured with an indented edge, the indented edge configured to engage the frame (30) when the tent cover (40) is placed in an inverted position onto the frame (30).

17. The gas burner shield of any of claims 10 to 16, wherein the tent cover (40) is configured with a plurality of apertures (44), the apertures (44) configured such that heat will pass through the apertures (44) when the tent cover is placed over an individual gas burner (10).

18. A gas burner system (100) for a grill (18), the grill (18) having a casting and a cooking surface located within the casting, said gas burner system comprising:
- a plurality of individual gas burner element (10), each of the plurality of the individual gas burner elements (10) being located inside the grill casting and beneath the cooking surface;
- a plurality of individual gas supply lines (12), wherein each of the plurality of individual gas 6 lines (12) has a first end and a second end, wherein the first end of each individual gas supply line (12) is connected to one of the plurality of individual gas burner elements (10), and wherein the second end of each individual gas supply line is connected to a gas supply;
- means (14) to connect one or more of the plurality of individual gas burner elements (10) to another of the plurality of individual gas burner elements (10);
- a plurality of frames (30), each of the plurality of frames (30) configured to attach to the grill (18) casting such that each of the plurality of frame (30) is disposed over one of the plurality of individual gas burner elements (10);
- a plurality of substantially rectilinear tent covers (40), each of the plurality of rectilinear tent covers (40) configured to engage one of the plurality of frames (30) such that when one of the plurality of rectilinear tent covers (40) is engaged with one of the plurality of frames (30), one of the plurality of individual gas burner elements (10) is protected by the rectilinear tent cover (40).
